# EUROPÄISCHE PATENTSCHRIFT

(11) **EP 3 930 916 B1**
(45) Veröffentlichungstag und Bekanntmachung des Hinweises auf die Patenterteilung: **14.02.2024**
(21) Anmeldenummer: 20708077.1
(22) Anmeldetag: 28.02.2020
(51) Int. Cl.: B05B 14/43

(54) **FILTERMODUL UND ABSCHEIDEVORRICHTUNG ZUM ABSCHEIDEN VON OVERSPRAY, BESCHICHTUNGSANLAGE UND VERFAHREN ZUM BETREIBEN EINER BESCHICHTUNGSANLAGE**
FILTER MODULE AND TRAP FOR TRAPPING OVERSPRAY, COATING FACILITY AND METHOD FOR OPERATING A COATING FACILITY
MODULE DE FILTRE ET DISPOSITIF SÉPARATEUR POUR LA SÉPARATION DE SURPULVÉRISATION, INSTALLATION DE REVÊTEMENT ET PROCÉDÉ POUR LA CONDUITE D'UNE INSTALLATION DE REVÊTEMENT

(30) Priorität: 01.03.2019 DE 102019105256
(43) Veröffentlichungstag der Anmeldung: 05.01.2022
(73) Patentinhaber: Eisenmann GmbH, 71032 Böblingen (DE)
(72) Erfinder: POBOSS, Norman, 71034 Böblingen (DE); HALBARTSCHLAGER, Johann, 71088 Holzgerlingen (DE); KLOTZ, Marco, 75382 Althengstett (DE)
(74) Vertreter: Ostertag & Partner Patentanwälte mbB
(86) Internationale Anmeldenummer: PCT/EP2020/055316
(87) Internationale Veröffentlichungsnummer: WO 2020/178183

(56) Entgegenhaltungen:
- WO-A2-03/084638
- DE-A1-102015 202 257
- DE-A1-102016 001 485
- DE-A1-102017 116 663
- DE-U1-202011 107 555

## Beschreibung

Die Erfindung betrifft ein Filtermodul zum Abscheiden von Overspray aus mit Overspray beladener Kabinenluft von Beschichtungsanlagen, insbesondere von Lackieranlagen, mit einem Modulgehäuse, in welchem eine Filterstruktur untergebracht ist und welches einen Moduleinlass und einen Modulauslass aufweist, wobei das Filtermodul derart konzipiert ist, dass es nach Erreichen einer Grenzbeladung mit Overspray gegen ein leeres Filtermodul ausgetauscht wird.

Außerdem betrifft die Erfindung eine Abscheidevorrichtung zum Abscheiden von Overspray aus mit Overspray beladener Kabinenluft von Beschichtungsanlagen, insbesondere von Lackieranlagen, mit wenigstens einem Filtermodul, durch welches mit Overspray beladene Kabinenluft leitbar ist und in dem sich Overspray abscheidet.

Darüber hinaus betrifft die Erfindung eine Beschichtungsanlage zum Beschichten, insbesondere zum Lackieren, von Gegenständen, insbesondere von Fahrzeugkarosserien, mit
a) wenigstens einer Beschichtungskabine, in welcher die Gegenstände mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung, welcher dieser Luftstrom zuführbar ist und wo ein Großteil zumindest der Feststoffe aus dem Overspray abgeschieden wird.

Und die Erfindung betrifft ferner ein Verfahren zum Betreiben einer Beschichtungsanlage zum Beschichten, insbesondere zum Lackieren, von Gegenständen, insbesondere von Fahrzeugkarosserien, wobei Overspray aus Beschichtungsmaterial entsteht, bei welchem der Overspray von einem Luftstrom aufgenommen und zu einer Abscheidevorrichtung in Form von einem oder mehreren Filtermodulen geführt wird, in welchen ein Großteil zumindest der Feststoffe aus dem Overspray abgeschieden wird, wobei jedes Filtermodul nach Erreichen einer Grenzbeladung mit Overspray gegen ein leeres Filtermodul ausgetauscht wird.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren wird der Begriff Overspray immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann. Die WO 03/084638 A2 beschreibt Filtermodule, die recyclebar aus einem zerkleinerbaren oder auflösbaren nichtmetallischen Material gefertigt werden.

Aus der DE 10 2011 108 631 A1 ist es bekannt, mit austauschbaren Einweg-Filtermodulen zu arbeiten, die nach Erreichen einer Grenzbeladung mit Overspray gegen unbeladene Filtermodule ausgetauscht und entsorgt oder gegebenenfalls recycelt werden. Die Aufbereitung und/oder Entsorgung von derartigen Filtermodulen kann energetisch und auch im Hinblick auf die erforderlichen Ressourcen verträglicher sein als der Aufwand bei anderen Abscheidekonzepten, wie beispielsweise am Markt bekannten Nassabscheidern oder elektrostatisch arbeitenden Abscheidevorrichtungen.

Dennoch ist es Aufgabe der Erfindung, die Energie- und Ressourceneffektivität im Zusammenhang mit dem Abscheiden von Overspray zu verbessern.

Diese Aufgabe wird bei einem Filtermodul der eingangs genannten Art dadurch gelöst, dass das Filtermodul eine wiederverwertbare Mehrwegstruktur aus einem oder mehreren thermisch regenerierbaren Mehrweg-Bauteilen umfasst, so dass das Filtermodul zumindest thermisch teilregenerierbar ist.

Erfindungsgemäß wurde erkannt, dass mit solchen Filtermodulen der Aufwand und die Kosten für die Entsorgung eines jeweiligen Filtermoduls beträchtlich gesenkt werden können, wobei dabei aber das ansonsten sehr effektive und betriebssichere Abscheidekonzept mit austauschbaren Filtermodulen weitergeführt werden kann. Erfindungsgemäße Filtermodule können auch nachträglich in bestehenden Beschichtungsanlagen verwendet werden, die mit austauschbaren Filtermodulen arbeiten.

Unter einem thermisch regenerierbaren Mehrweg-Bauteil ist ein Bauteil zu verstehen, welches eine thermische Behandlung, bei welcher vorhandener Overspray thermisch zersetzt und hierdurch aus dem Filtermodul entfernt wird, ohne Einbußen seiner Funktionsfähigkeit wenigstens einmal und vorzugsweise wiederholt übersteht. Hierauf wird weiter unten nochmals näher eingegangen.

Bei einer Variante kann das Filtermodul vollständig thermisch regenerierbar sein. Es ist jedoch ebenfalls von Vorteil, wenn das Filtermodul eine Einwegstruktur aus einer oder mehreren thermisch zersetzbaren Einweg-Bauteilen umfasst. Im Gegensatz zu einem thermisch regenerierbaren Mehrweg-Bauteil wird ein thermisch zersetzbares Einweg-Bauteil bei einer thermischen Behandlung, bei welcher vorhandener Overspray thermisch zersetzt wird, ebenfalls zersetzt, so dass nach der thermischen Behandlung nur noch die Mehrwegstruktur des Filtermoduls übrigbleibt.

Vorteilhaft sind dabei ein oder mehrere thermisch regenerierbare Mehrweg-Bauteile oder ein oder mehrere thermisch zersetzbare Einweg-Bauteile aus folgender Gruppe vorhanden:
a) das Modulgehäuse als Ganzes oder eine Gehäuse-Rahmenstruktur des Modulgehäuses und/oder ein oder mehrere Gehäuse-Wandsegmente des Modulgehäuses;
b) eine Sammelwanne für Beschichtungsmaterial, das sich in dem Filtermodul abscheidet und nach unten abfließt;
c) die Filterstruktur als Ganzes oder ein oder mehrere Filterelemente der Filterstruktur, insbesondere ein oder mehrere Vliesmatten der Filterstruktur;
d) eine Filterträgerstruktur als Ganzes für die Filterstruktur oder eine Trägerplatte für Filterelemente der Filterträgerstruktur und/oder zumindest eine Stützwand der Filterträgerstruktur und/oder ein Aufnahmegerüst zum Aufnehmen einer Filtereinrichtung, welche die Filterstruktur umfasst;
e) die Filtereinrichtung als Ganzes oder ein Filtergehäuse der Filtereinrichtung.

Eine effektive thermische Behandlung und Zersetzung des Overspray und der Bauteile kann erfolgen, wenn ein oder mehrere thermisch zersetzbare Einweg-Bauteile aus einem oder mehreren der folgenden Materialien gefertigt sind: Cellulosematerial, insbesondere gegebenenfalls behandeltes Papier- und Pappmaterial, Wellkarton, Karton mit stehender Welle, Karton mit Wabenstruktur oder Wickelkarton, Holz; MDF-Material; Kunststoffmaterial, insbesondere Polyethylen oder Polypropylen.

Im Hinblick auf die Beständigkeit der wiederverwertbaren Mehrwegstruktur gegen eine thermische Behandlung ist es günstig, wenn ein oder mehrere thermisch regenerierbare Mehrweg-Bauteile aus einem oder mehreren der folgenden Materialien gefertigt sind: Metall oder Metalllegierung, insbesondere Edelstahl, Stahl oder Stahlblech; Keramikmaterial.

Die oben genannte Aufgabe wird bei einer Abscheidevorrichtung der eingangs genannten Art dadurch gelöst, dass das wenigstens eine Filtermodul ein Filtermodul mit einigen oder allen der oben erläuterten Merkmale ist.

Bei einer Beschichtungsanlage der eingangs genannten Art wird die oben genannte Aufgabe dadurch gelöst, dass die Abscheidevorrichtung in dieser Weise ausgebildet ist.

Wenn bei der Beschichtungsanlage eine Thermobehandlungsvorrichtung, insbesondere ein Pyrolyseofen vorhanden ist, in welchem ein oder mehrere beladene Filtermodule in der Weise thermisch behandelbar sind, dass Overspray thermisch zersetzt wird, kann die thermische Behandlung und die Rückgewinnung der Mehrwegstruktur vor Ort am Betriebsstandort der Beschichtungsanlage erfolgen. Hierdurch werden insbesondere Transportkosten gering gehalten.

Bei einem Verfahren der eingangs genannten Art wird die oben genannte Aufgabe gelöst, indem ein oder mehrere Filtermodule mit einigen oder allen der oben im Zusammenhang mit dem Filtermodul erläuterten Merkmale verwendet werden, wobei ein Filtermodul nach Erreichen seiner Grenzbeladung mit Overspray als beladenes Filtermodul in einer Thermobehandlungsvorrichtung einer thermischen Behandlung unterzogen wird, bei welcher der Overspray thermisch zersetzt wird.

Die Thermobehandlungsvorrichtung kann wie oben angegeben am Betriebsstandort der Beschichtungsanlage oder an einem anderen Ort vorhanden sein. Wenn die Thermobehandlungsvorrichtung nicht am Ort der Beschichtungsanlage vorgesehen ist, kann eine Thermobehandlungsvorrichtung insbesondere mit beladenen Filtermodulen aus umliegenden Beschichtungsanlagen als Sammelanlaufstelle beliefert werden.

Im obigen Sinne kann es günstig sein, wenn ein oder mehrere Filtermodule mit einer Einwegstruktur verwendet werden, die bei der thermischen Behandlung thermisch zersetzt wird, wobei die nach der thermischen Behandlung verbleibende Mehrwegstruktur dann wieder mit einer Einwegstruktur zu einem Filtermodul vervollständigt wird, welches hiernach zum Abscheiden von Overspray verwendet wird.

Eine effektive thermische Behandlung kann durchgeführt werden, indem das beladene Filtermodul einer Temperatur zwischen 200°C und 1.500°C, vorzugsweise zwischen 300°C und 900°C, weiter bevorzugt zwischen 400°C und 900°C und besonders bevorzugt zwischen 400°C und 600°C ausgesetzt wird.

Dabei ist es besonders vorteilhaft, wenn die thermische Behandlung eine Pyrolyse ist, die in einem Pyrolyseofen und insbesondere ohne gesonderte Zufuhr von Sauerstoff durchgeführt wird, wobei ein Pyrolysegas entsteht.

Bei der thermischen Behandlung entsteht ein heißes Abgas, welches vorteilhaft als Wärmequelle für eine Sekundäreinrichtung oder zur Stromerzeugung genutzt wird.

Die Sekundäreinrichtung ist vorzugsweise ein Trockner, in dem die beschichteten Gegenstände getrocknet werden und welcher einen Wärmetauscher umfasst, dem das Abgas zugeführt wird. Alternativ oder ergänzend kann das Pyrolysegas zur Stromerzeugung einem Blockheizkraftwerk zugeführt werden.

Es ist energetisch vorteilhaft, wenn die bei der thermischen Behandlung gewonnene thermische Energie in einem Energiespeicher gespeichert wird und gegebenenfalls nachfolgend in einer ORC-Anlage genutzt wird

Ebenfalls vorteilhaft kann die Energie des Abgases zur Stromerzeugung genutzt werden, wozu das Abgas insbesondere einer ORC-Anlage zugeführt wird.

Nachfolgend werden Ausführungsbeispiele der Erfindung anhand der Zeichnungen näher erläutert. In diesen zeigen:
- Figur 1: eine Vorderansicht einer Lackierkabine einer Beschichtungsanlage mit einer Abscheidevorrichtung für Overspray mit austauschbaren und zumindest thermisch teilregenerativen Filtermodulen, von denen zwei Ausführungsbeispiele schematisch veranschaulicht sind;
- Figur 2: den konzeptionellen Aufbau eines Filtermoduls gemäß dem ersten Ausführungsbeispiel mit einem Modulgehäuse und einer darin untergebrachten Filtereinheit;
- Figur 3: eine erste Abwandlung der Filtereinheit;
- Figur 4: eine zweite Abwandlung der Filtereinheit;
- Figur 5: ein Übersichtsschema, in dem die Verwendung der Filtermodule, deren Teilregenerierung und Wege der Energienutzung am Beispiel einer Lackieranlage veranschaulicht sind.

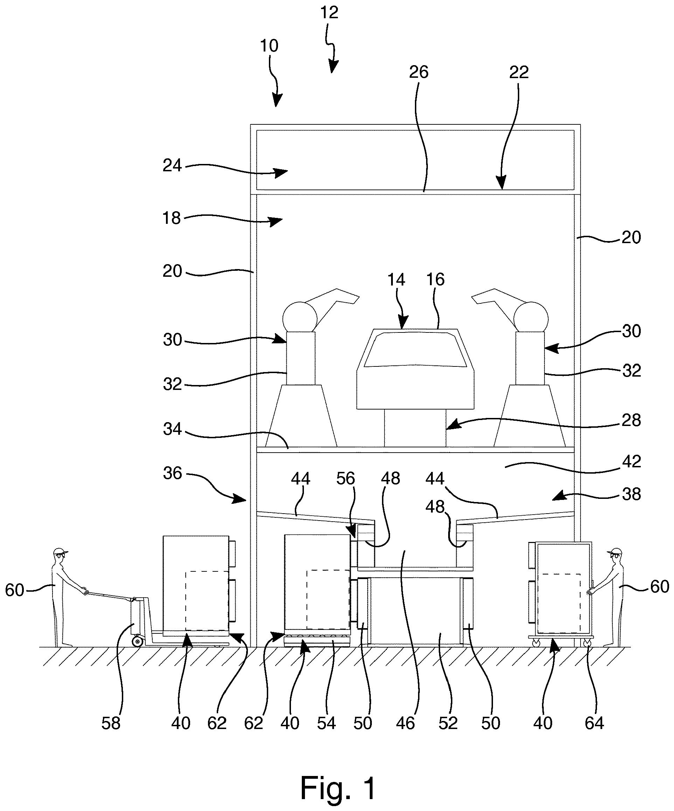

Figur 1 zeigt eine Beschichtungskabine 10 einer insgesamt mit 12 bezeichneten Beschichtungsanlage, in welcher Gegenstände 14 mit einem Beschichtungsmaterial, insbesondere einem Lack, beaufschlagt werden. Als Beispiel für zu lackierende Gegenstände 14 ist eine Fahrzeugkarosserie 16 gezeigt. Bevor Fahrzeugkarosserien 16 zu einer solchen Beschichtungskabine 10 gelangen, werden sie in Vorbehandlungsstationen zumeist im Tauchverfahren z.B. gereinigt und entfettet.

Die Beschichtungskabine 10 umfasst einen Beschichtungstunnel 18, welcher von Seitenwänden 20 und einer Kabinendecke 22 begrenzt, jedoch an den Stirnseiten offen ist. Darüber hinaus ist der Lackiertunnel 18 nach unten hin in der Weise offen, dass mit Overspray beladene Kabinenabluft nach unten strömen kann. Die Kabinendecke 22 definiert eine untere Begrenzung eines Luftzuführraumes 24 und ist als Filterdecke 26 ausgebildet.

Die Fahrzeugkarosserien 16 werden mit einem an und für sich bekannten Fördersystem 28 von der Eingangsseite des Beschichtungstunnels 18 zu dessen Ausgangsseite transportiert. Im Inneren des Beschichtungstunnels 18 befinden sich Applikationseinrichtungen 30 in

Form von mehrachsigen Applikationsrobotern 32, wie sie ebenfalls an und für sich bekannt sind. Mittels der Applikationsroboter 32 können die Fahrzeugkarosserien 16 mit dem entsprechenden Material beschichtet werden. Eine manuelle Applikation des Materials durch Werker kann hierzu alternativ oder ergänzend durchgeführt werden.

Durch die Beschichtungskabine 10 kann ein Luftstrom geleitet werden, der entstehendes Overspray des Beschichtungsmaterials aufnimmt und abführt.

Zu diesem Zweck strömt während des Beschichtungsvorgangs aus dem Luftzuführraum 24 Kabinenluft nach unten durch den Beschichtungstunnel 18 hindurch, nimmt dabei bei der Applikation entstehenden Lack-Overspray auf und führt diesen mit sich weiter nach unten.

Nach unten hin ist der Beschichtungstunnel 18 über einen begehbaren Gitterrost 34 zu einem darunter angeordneten Anlagenbereich 36 hin offen, in welchem der von der Kabinenluft mitgeführte Overspray von der Kabinenluft getrennt wird.

Dieser mit Overspray beladene Luftstrom wird mit Hilfe einer Luftleiteinrichtung 38 zu einer Abscheidevorrichtung in Form von einem oder mehreren Filtermodulen 40 geleitet, in welchen ein Großteil zumindest der Feststoffe aus dem Overspray abgeschieden wird. Hierzu umfasst die Luftleiteinrichtung 38 beim vorliegenden Ausführungsbeispiel einen Leitkanal 42, welcher durch Leitbleche 44 gebildet ist, die sich von den Seitenwänden 20 nach innen und nach unten geneigt erstrecken. Die Leitbleche 44 können auch horizontal verlaufen. Der Leitkanal 42 mündet unten in mehrere Anschlusskanäle 46 mit Anschlussöffnungen 48. In Figur 1 ist lediglich ein Anschlusskanal 46 zu erkennen; in der Praxis sind in Richtung senkrecht zur Papierebene der Figur 1 mehrere solche Anschlusskanäle 46 hintereinander angeordnet, welche jeweils mit Filtermodulen 40 verbunden werden können.

Figur 1 veranschaulicht ein Ausführungsbeispiel, bei dem die Anschlusskanäle jeweils zwei in Richtung quer zur Transportrichtung der Fahrzeugkarosserien 16 gegenüberliegende Anschlussöffnungen 48 aufweisen. In diesem Fall können jeweils zwei Filtermodule 40 auf den gegenüberliegenden Seiten des Anschlusskanals 46 an die Luftleiteinrichtung 38 angeschlossen werden.

Im Betrieb ist jedes Filtermodul 40 strömungstechnisch und lösbar mit der Luftleiteinrichtung 38 verbunden. Die Kabinenluft durchströmt in dem Filtermodul 40 eine Filtereinheit, die mit gestrichelten Linien angedeutet ist und an oder in der sich der Lack-Overspray abscheidet. Hierauf wird weiter unten nochmals eingegangen. Insgesamt ist jedes Filtermodul 40 als austauschbare Baueinheit ausgebildet.

Nach Verlassen eines Filtermoduls 40 ist die Kabinenluft nun weitgehend von Overspraypartikeln befreit und strömt aus den Filtermodulen 40 in einen Zwischenkanal 50, über den sie in einen Sammelströmungskanal 52 gelangt.

Die Kabinenluft wird über den Sammelströmungskanal 52 einer weiteren Aufbereitung und Konditionierung zugeführt und im Anschluss daran in einem hier nicht eigens gezeigten Kreislauf wieder in den Luftzuführraum 24 geleitet, aus dem sie wieder von oben in den Beschichtungstunnel 18 einströmt.

Falls die Kabinenluft durch die vorhandenen Filtermodule 40 noch nicht ausreichend von Overspraypartikeln befreit ist, können den Filtermodulen 40 noch weitere Filterstufen nachgelagert sein, denen die Kabinenluft zugeführt wird und in denen beispielsweise auch elektrostatisch arbeitende Abscheider eingesetzt werden, wie sie an und für sich bekannt sind.

Jedes Filtermodul 40 ist für die Aufnahme einer maximalen Lackmenge, d.h. für eine Grenzbeladung mit Overspray, ausgelegt, die von der Bauart des Filtermoduls 40 und den für dieses verwendeten Materialien abhängt. Die bereits aufgenommene Lackmenge kann über eine Waage 54 überwacht werden, die in Figur 1 bei dem dort links gezeigten Filter-modul 40 veranschaulicht ist. Alternativ kann die Grenzbeladung mittels einer Differenzdruckbestimmung ermittelt werden. Je größer die Beladung des Filtermoduls 40 ist, desto größer ist der durch das Filtermodul 40 aufgebaute Luftwiderstand.

Im Betrieb ist jedes Filtermodul 40 mit Hilfe einer nur schematisch angedeuteten Verriegelungseinrichtung 56 in seiner Betriebsstellung arretiert. Wenn ein Filtermodul 40 seine maximale Aufnahmekapazität erreicht, wird diese Verriegelungseinrichtung 56 gelöst und das voll beladene Filtermodul 46 aus dem unteren Anlagenbereich 36 der Beschichtungskabine 10 herausgefahren. Dies kann beispielsweise mit Hilfe eines Hubwagens 58 erfolgen, der von einem Werker 60 bedient wird. Wie anhand der in Figur 1 links gezeigten Filtermodule 40 veranschaulicht ist, kann hierzu ein Bodenbereich 62 der Filtermodule 40 in seiner Geometrie und seinen Abmessungen als standardisierte Tragstruktur und beispielsweise nach Vorgabe einer so genannten Euro-Palette ausgebildet sein.

Auf der rechten Seite der Figur 1 ist als Abwandlung ein Filtermodul 40 gezeigt, bei dem der Bodenbereich 62 mit Laufrollen 64 versehen ist. Ein solches Filtermodul 40 kann ohne ergänzende Hubeinrichtung von einem Werker 60 verfahren werden.

Wenn ein Filtermodul 40 seine Grenzbeladung mit Overspray erreicht, wird es gegen ein leeres, d.h. nicht mit Overspray beladenes Filtermodul 40 ausgetauscht. Vor einem Austausch eines beladenen Filtermoduls 40 gegen ein leeres Filtermodul 40 wird die Strömungsverbindung des auszutauschenden Filtermoduls 40 mit der Luftleiteinrichtung 38 mittels nicht eigens gezeigter Sperreinrichtungen, beispielsweise mittels eines jeweiligen Sperrschieber, verschlossen. Die Sperreinrichtung leitet die Kabinenluft zu den neben dem auszutauschenden Filtermodul 40 angeordneten Filtermodulen 40 um, die dessen Aufgabe solange übernehmen, bis der Austausch durchgeführt worden ist.

Dann wird ein leeres Filtermodul 40 in die Betriebsstellung geschoben, in der dieses strömungsdicht mit der Luftleiteinrichtung 38 verbunden ist, worauf die Verriegelungseinrichtung 56 wieder arretiert wird. Der Sperrschieber der Luftleiteinrichtung 38 wird wieder in eine Offenstellung gebracht, so dass das neu positionierte Filtermodul 40 von der Kabinenluft durchströmt wird.

Bei einer nicht eigens gezeigten Abwandlung kann der Austausch eines Filtermoduls 40 auch automatisiert oder zumindest halb automatisiert erfolgen. Hierzu kann vor den nebeneinander angeordneten Filtermodulen 40 eine Fördertechnik vorhanden sein, welche die auszutauschenden Filtermodule 40 zu einer oder mehreren Entnahmestellen fördern kann, wo sie von einem Werker 60 entnommen werden können. An einer oder mehreren Beladungsstellen kann dann ein leeres Filtermodul 40 an die Fördertechnik übergeben werden, welche dieses leere Filter-modul 40 dann an den Ort im Anlagenbereich 36 fördert, wo das volle Filtermodul 40 entnommen worden ist.

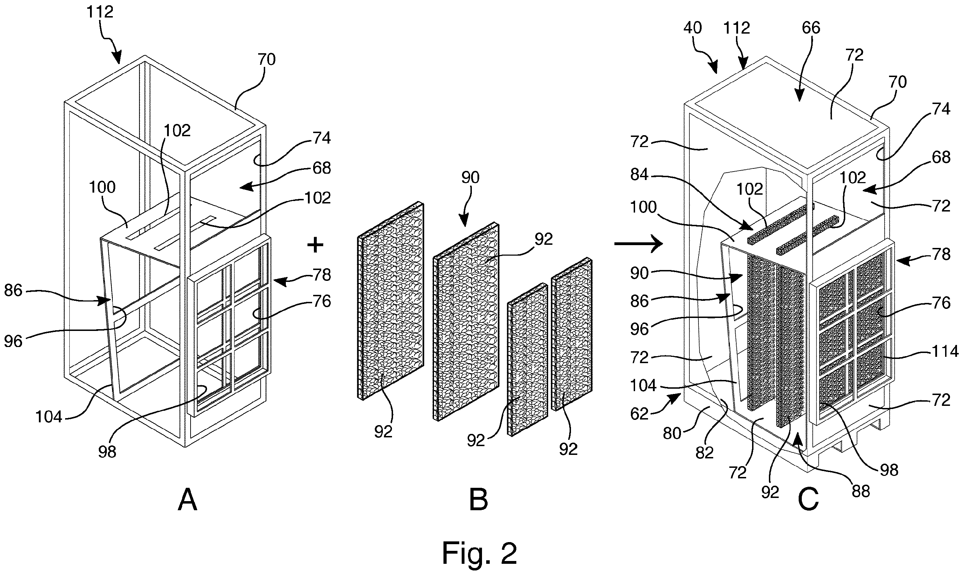

Nachfolgend wird nun anhand von Figur 2 mit den Teilfiguren A, B und C zunächst der grundsätzliche Aufbau eines Filtermoduls 40 erläutert; ein vollständiges Filtermodul 40 ist dort nur ganz rechts in Teilfigur C zu erkennen.

Ein Filtermodul 40 umfasst ein Modulgehäuse 66, welches eine Strömungskammer 68 begrenzt. Das Modulgehäuse 66 weist eine Gehäuse-Rahmenstruktur 70 auf, die ihrerseits Gehäuse-Wandsegmente 72 trägt, welche die Strömungskammer 68 begrenzen. Wenn Gehäuse-Wandsegmente 72 selbsttragend miteinander verbunden sind, kann auf eine entsprechende Gehäuse-Rahmenstruktur verzichtet werden. Bei Phase C der Figur 2 ist ein Wandsegment 72 weggebrochen gezeigt, so dass die Strömungskammer 68 einsehbar ist.

Die Strömungskammer 68 erstreckt sich zwischen einem Moduleinlass 74 und einem Modulauslass 76, welche beide auf einer Anschlussseite 78 des Modulgehäuses 66 vorgesehen sind, die entsprechend sowohl als Einlassseite für die mit Overspray beladene Kabinenluft als auch als Auslassseite für die gereinigte Kabinenluft dient.

Die Positionen des Moduleinlasses 74 und des Modulauslasses 76 des Filtermoduls 40 sind komplementär zur Luftleiteinrichtung 38 - hier konkret zu den Anschlusskanälen 46 - bzw. komplementär zu dem Sammelströmungskanal 52 - hier konkret zu einem jeweiligen Zwischenkanal 50 - ausgebildet. Auf diese Weise können der Moduleinlass 74 strömungstechnisch mit der Luftleiteinrichtung 38 und der Modulauslass 76 strömungstechnisch mit dem Sammelströmungskanal 52 verbunden werden.

Das in Figur 2C gezeigte Filtermodul 40 entspricht den in Figur 1 links gezeigten Filtermodulen 40; das Modulgehäuse 66 ist dabei von einem Bodenteil 80 getragen, welches beim vorliegenden Ausführungsbeispiel in seiner Geometrie und seinen Abmessungen als standardisierte Tragstruktur und beispielsweise nach Vorgabe einer oben bereits erwähnten Euro-Palette ausgebildet ist.

Bei der in Figur 1 rechts gezeigten Abwandlung kann das Bodenteil 80 beispielsweise als Tragrahmen ausgebildet sein, in den das Modulgehäuse 66 eingesetzt wird und an welchem die Laufrollen 64 befestigt sind.

Zumindest ein unterer Sammelbereich des Filtermoduls 40 ist flüssigkeitsdicht und auf diese Weise als Sammelwanne 82 für Beschichtungsmaterial ausgebildet, das sich in dem Filtermodul 40 abscheidet und nach unten abfließt. Eine solche Sammelwanne 82 kann auch als separates Bauteil vorgesehen sein.

In der Strömungskammer 68 ist eine oben bereits angesprochene und auch in Figur 1 mit 84 bezeichnete Filtereinheit angeordnet, welche eine Filterträgerstruktur 86 für eine Filterstruktur 88 umfasst. Beim in Figur 2 gezeigten Ausführungsbeispiel umfasst die Filterstruktur 88 mehrere Filterelemente 90 in Form von Vliesmatten 92 mit unterschiedlichen Abmessungen, welche in Strömungsrichtung durch die Filtereinheit 84 hindurch hintereinander angeordnet und von der Filterträgerstruktur 86 gehalten sind.

Die Filterstruktur 88 ist in einem durch die Filterträgerstruktur 86 definierten Filterraum 94 angeordnet, in welchen die mit Overspray beladene Kabinenluft durch einen Strömungseingang 96 der Filtereinheit 84 einströmen kann und aus welchem die dann gefilterte Kabinenluft über einen Strömungsausgang 98 ausströmen kann, der zu dem Modulauslass 76 des Filtermoduls 40 führt. Zu diesem Zweck weist die Filterträgerstruktur 86 beim vorliegenden Ausführungsbeispiel eine obere Trägerplatte 100 mit Halteschlitzen 102 für die Vliesmatten 92 auf.

Von der Trägerplatte 100 gehen auf gegenüberliegenden Seiten Stützwände 104 bis zum Boden des Modulgehäuses 66 nach unten ab, in denen der Strömungseingang 96 bzw. der Strömungsausgang 98 ausgebildet sind. An den Flanken bezogen auf die Strömungsrichtung ist die Filtereinheit 84 offen, so dass der Filterraum 94 bei dem Filtermodul 40 einerseits durch die Filterträgerstruktur 86 und andererseits durch die flankierenden Bereiche von Gehäuse-Wandsegmenten 72 des Modulgehäuses 66 begrenzt wird.

Die Vliesmatten 92 veranschaulichen nur exemplarisch eine mögliche Variante einer Filterstruktur 88. Die Filterstruktur 88 auch andere Teile umfassen, welche für eine Abscheidung von Overspray in dem Filtermodul 40 sorgen. Dies kann beispielsweise auch durch Schäume, Gewirke, Gitter, Lamellen, Rinnen, Streben, Netze, Matten und dergleichen erreicht werden, wie es an und für sich bekannt ist.

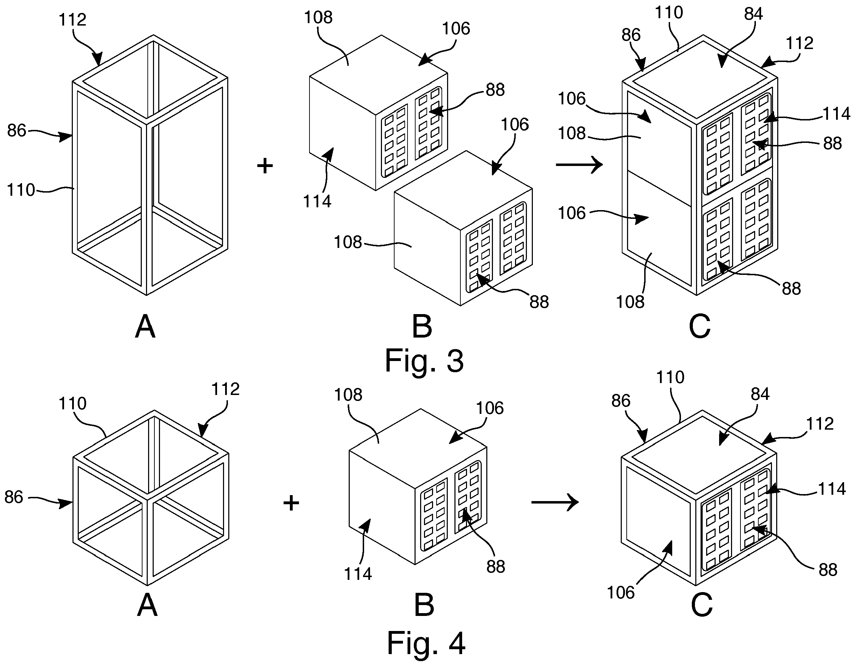

Die Figuren 3 und 4 veranschaulichen abgewandelte Filtereinheiten 84, wobei Bauteile und Komponenten, die bereits zu Figur 2 erläuterten Bauteilen und Komponenten funktional entsprechen, dieselben Bezugszeichen tragen. Die in den Figuren 3 und 4 gezeigten Filtereinheiten 84 können in einem Filtermodul 40 anstelle der in Figur 2 gezeigten Filtereinheit 84 vorgesehen sein.

Bei den in den Figuren 3 und 4 anhand der jeweiligen Teilfiguren A, B und C gezeigten Ausführungsbeispielen ist die Filterstruktur 88 jeweils in gesonderten Filtereinrichtungen 106 untergebracht, die ein eigenes durchströmbares Filtergehäuse 108 haben. Diese weist entsprechend eine Einlass- und eine Auslassseite auf, die nicht gesondert gekennzeichnet sind.

Die Filterträgerstruktur 86 ist komplementär zu einer oder zu mehreren Filtereinrichtungen 106 ausgebildet. Bei den vorliegenden Ausführungsbeispielen ist diese Filterträgerstruktur 86 in Figur 3 beispielhaft als Aufnahmegerüst 110 für zwei Filtereinrichtungen 106 und in Figur 4 beispielhaft als Aufnahmegerüst 110 für eine einzige Filtereinrichtung 106 ausgelegt; gegebenenfalls können dann zwei solche Filterträgerstrukturen 86 mit jeweils einer Filtereinrichtung 106 als Verband verwendet werden und eine Filtereinheit 84 ausbilden. In das Aufnahmegerüst 110 können jeweils zwei bzw. eine Filtereinrichtung 106 eingeschoben oder anderweitig eingebracht werden.

Die Filterstruktur 88 kann wieder durch durchströmbare Filterelemente 90, beispielsweise Vliesmatten 92, ausgebildet sein, von denen in Teilfigur 2C nur eine ein Bezugszeichen trägt. Es können auch eine Kartonstruktur oder oben erläuterte andere Teile vorhanden sein, welche für eine Abscheidung von Overspray in dem Filtermodul 40 sorgen. In dem Filtergehäuse 108 kann die Filterstruktur 88 mittels strömungsdichter Filterelemente 90 ein Strömungslabyrinth ausbilden, so dass die Funktionsweise eines Trägheitsfilters als Alternative oder als Ergänzung zu der Funktionsweise eines Abscheidefilters, bei dem durchströmbare Filterelemente 90 vorhanden sind, bei der Filtereinheit 84 genutzt werden kann. In entsprechender Weise können auch bei dem Ausführungsbeispiel nach Figur 2 als Alternative oder als Ergänzung zu den dort gezeigten Vliesmatten 92 entsprechend strömungsdichte Filterelemente 90 vorhanden sein.

Die Kabinenluft strömt bei den anhand der Figuren 2 bis 4 veranschaulichten Filtermodulen 40 auf der Anschlussseite 78 durch den Moduleinlass74 in die Strömungskammer 68 ein, wird dort um 180° umgelenkt und durch den Strömungseingang 96 der Filtereinheit 84 geführt.

Bei nicht eigens gezeigten Abwandlungen können der Moduleinlass 74 und/oder der Modulauslass 76 auch an verschiedenen Seiten des Filtermoduls 40 vorgesehen und dann jeweils eine gesonderte Einlassseite bzw. eine gesonderte Auslassseite des Filtermoduls 40 definieren. Beispielsweise kann der Moduleinlass 74 oben am Filtermodul 40 oder auf der Seite des Filtermoduls 40 vorgesehen sein, die dem Modulauslass 76 gegenüberliegt. Bei solchen Abwandlungen der Filtermodule 40 sind die Luftleiteinrichtung 38 und der Sammelströmungskanal 52 bzw. die zugehörigen Anschlusskanäle 46 und Zwischenkanäle 50 entsprechend komplementär in ihren Anordnungen und Abmessungen modifiziert. Die Kabinenluft wird in diesen Fällen nach dem Einströmen in das Filtermodul 40 nicht um 180° umgelenkt, bevor es in die Filtereinheit 84 strömt, sondern wird gegebenenfalls nur um 90° oder gar nicht umgelenkt.

Die in Figur 3C gezeigte Filterträgerstruktur 86 kann gegebenenfalls gemeinsam mit den Filtereinrichtungen 106, mit denen sie bestückt ist, als Filtermodul 40 dienen. Gegebenenfalls wird die Baugruppe aus Aufnahmegerüst 110 und Filtereinrichtungen 106 als Modulgehäuse 66 auf ein Bodenteil 80 ausgesetzt; die gegenüberliegenden Seiten der Filtereinrichtungen 106 definieren dann den Moduleinlass 74 bzw. den Modulauslass 76. Für ein derartiges Filtermodul 40 muss die Luftleiteinrichtung 38 der Beschichtungskabine 10 entsprechend modifiziert werden. Entsprechendes gilt sinngemäß für das für lediglich mit einer Filtereinrichtung 106 bestückte Aufnahmegerüst 110 gemäß Figur 4C.

Die Art des Beschichtungsmaterials, mit welchem die Gegenstände 14 in der Beschichtungskabine 10 beschichtet werden, kann für verschiedene Gegenstände 14 oder bei unterschiedlichen Prozessabläufen oder -phasen anders sein bzw. wechseln. Abhängig von dem applizierten Beschichtungsmaterial entstehen auch unterschiedliche Arten von Overspray.

Abhängig von der Art und den Eigenschaften des entstehenden Oversprays können auch die Anforderungen an verwendete Filtermodule 40 unterschiedlich sein, um eine auf die jeweilige Art des Overspray abgestimmte und effektive Filterwirkung zu entfalten.

So können abhängig von der Art und den Eigenschaften des entstehenden Oversprays Filtermodule 40 mit einer an die Art des Oversprays angepassten Filterstruktur 88 für eine effektive Abscheidung des Oversprays verwendet werden.

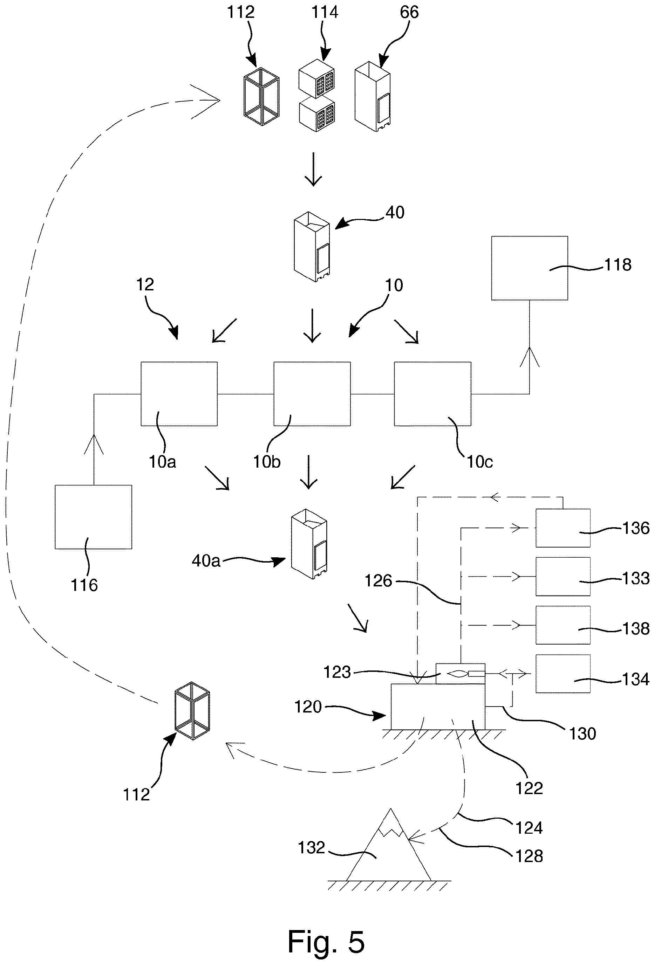

Das Filtermodul 40 ist so konzipiert, dass es einer thermischen Behandlung unterzogen werden kann, bei welcher der aufgenommene Overspray thermisch zersetzt wird. Auf unterschiedliche Arten von möglichen thermischen Behandlungen wird weiter unten im Zusammenhang mit Figur 5 nochmals näher eingegangen.

Das Filtermodul 40 umfasst eine allgemein mit 112 bezeichnete wiederverwertbare Mehrwegstruktur aus einem oder mehreren thermisch regenerierbaren Mehrweg-Bauteilen, so dass ein Filtermodul 40, insbesondere ein mit Overspray beladenes Filtermodul 40, zumindest thermisch teilregenerierbar ist. Unter einem Wiederverwerten ist hier eine erneute und gegebenenfalls wiederholte Nutzung der Mehrwegstruktur 112 im Rahmen ihrer originären Funktion zu verstehen.

Wie eingangs erläutert, ist unter einem thermisch regenerierbaren Mehrweg-Bauteil ein Bauteil zu verstehen, welches eine thermische Behandlung, bei welcher vorhandener Overspray thermisch zersetzt und hierdurch aus dem Filtermodul 40 entfernt wird, ohne Einbu-βen seiner Funktionsfähigkeit wenigstens einmal und vorzugsweise wiederholt übersteht.

Dies sind einerseits Bauteile, die vor der thermischen Behandlung ihre Funktion nicht mehr erfüllen können und durch die thermische Behandlung funktionsmäßig regeneriert werden, so dass sie ihre originäre Funktion wieder erfüllen können. Als Beispiel hierfür sei ein bis zur Sättigung mit Overspray beladenes Filterelement 90 aus einem Metallvlies genannt, das keine brauchbare Filterwirkung mehr erreicht bzw. den Strömungsdurchgang durch das Filtermodul 40 sperrt. Bei einer thermischen Behandlung zersetzt sich der Overspray und das Metallvlies wird vom Overspray gereinigt und verbleibt gereinigt in dem Filtermodul 40, so dass es seine ursprüngliche Filterwirkung wieder erreichen kann.

Andererseits können auch Bauteile, die vor der thermischen Behandlung ihre Funktion einwandfrei erfüllen, solche thermisch regenerierbaren Mehrweg-Bauteile definieren. Als Beispiel für ein solches Mehrweg-Bauteil sei eine Gehäusestrebe oder dergleichen, beispielsweise aus Edelstahl, genannt, die eine thermische Behandlung, bei welcher die zersetzbaren Einweg-Bauteile zersetzt werden, ohne funktionelle Beeinträchtigung übersteht.

Hierbei kann das Filtermodul 40 bei einem Ausführungsbeispiel vollständig thermisch regenerierbar sein. In diesem Fall sind somit alle Bauteile, aus denen das Filtermodul 40 aufgebaut ist, thermisch regenerierbare Mehrweg-Bauteile und die wiederverwertbare Mehrwegstruktur 112 definiert das Filtermodul 40 als solches.

Das Filtermodul 40 kann bei einer Abwandlung ergänzend zu der wiederverwertbaren Mehrwegstruktur 112 eine allgemein mit 114 bezeichnete Einwegstruktur aus einer oder mehreren thermisch zersetzbaren Einweg-Bauteilen umfassen, so dass das Filtermodul thermisch teilregenerierbar ist. In diesem Fall ist das Filtermodul 40 also aus der wiederverwertbaren Mehrwegstruktur 112 und der Einwegstruktur 114 aufgebaut.

Wie ebenfalls bereits eingangs erläutert ist, wird ein thermisch zersetzbares Einweg-Bauteil im Gegensatz zu einem thermisch regenerierbaren Mehrweg-Bauteil bei einer thermischen Behandlung, bei welcher vorhandener Overspray thermisch zersetzt wird, ebenfalls zersetzt, so dass nach der thermischen Behandlung nur noch die Mehrwegstruktur 112 des Filtermoduls 40 übrigbleibt. Als Beispiel für ein Einweg-Bauteil sei ein Filterelement 90 aus einem Gewebevlies genannt, das bei der thermischen Behandlung zusammen mit dem Overspray zersetzt wird und durch eine neues Gewebevlies ersetzt werden muss, bevor das Filtermodul 40 wieder funktionsfähig ist.

Bei einen Filtermodul 40 gemäß den Figuren 2 bis 4 können die Gehäuse-Rahmenstruktur 70, ein oder mehrere Gehäuse-Wandsegmente 72, die Sammelwanne 82 oder ein oder mehrere Filterelemente 90 entweder ein wiederverwertbares thermisch regenerierbares Mehrweg-Bauteil oder ein thermisch zersetzbares Einweg-Bauteil sein.

Bei einem Filtermodul gemäß Figur 2 können außerdem die Trägerplatte 100, eine oder beide Stützwände 102 oder ein oder mehrere Vliesmatten 92 entweder ein wiederverwertbares thermisch regenerierbares Mehrweg-Bauteil oder ein thermisch zersetzbares Einweg-Bauteil sein.

Bei einem Filtermodul gemäß den Figuren 3 oder 4 können außerdem das Filtergehäuse 108 oder das Aufnahmegerüst 110 entweder ein wiederverwertbares thermisch regenerierbares Mehrweg-Bauteil oder ein thermisch zersetzbares Einweg-Bauteil sein.

Es können bei allen Ausführungsbeispielen auch das Modulgehäuse 66 als Ganzes, die Filtereinheit 84 als Ganzes, die Filterträgerstruktur 86 als Ganzes, die Filterstruktur 88 als Ganzes oder die Filtereinrichtung 106 als Ganzes entweder wiederverwertbar und hierzu thermisch regenerierbar sein oder thermisch zersetzbar sein. Dies bedeutet, dass in diesem Fall jeweils alle Bauteile des Modulgehäuses 66, der Filtereinheit 84, der Filterträgerstruktur 86, der Filterstruktur 88 oder der Filtereinrichtung 106 entweder thermisch regenerierbare Mehrweg-Bauteile oder thermisch zersetzbare Einweg-Bauteile sind.

Ergänzend zu den genannten und anhand der Figuren 2 bis 4 beschriebenen Bauteilen kann ein Filtermodul 40 weitere Bauteile aufweisen, die nicht eigens gezeigt sind. Hierzu zählen insbesondere ergänzende oder zusätzliche Rahmenstrukturen, Wände, Kulissen, Halterungen, Strömungsleitflächen, Sammelwannen, Befestigungsteile, Transportbaugruppen, Stutzen, Verbindungsglieder und dergleichen. Auch solche weiteren Bauteile können entweder thermisch regenerierbare Mehrweg-Bauteile oder thermisch zersetzbare Einweg-Bauteile sein.

Thermisch regenerierbare Bauteile können insbesondere aus Metall, insbesondere aus Edelstahl, Stahl oder Stahlblech, oder aus Keramikmaterialien gefertigt sein. Gegebenenfalls können tragende oder stützende Bauteile, wie Streben, Rahmenteile oder Wandelemente und dergleichen durch strukturelle Maßnahmen stabilisiert sein, so dass es zu keiner funktionsmindernden Verformung der Bauteile durch die thermische Belastung bei der thermischen Behandlung kommt. Hierfür können beispielsweise Rippen oder Sicken oder dergleichen in oder an den Bauteilen vorgesehen sein.

Thermisch zersetzbare Bauteile können aus Cellulosematerial, wie gegebenenfalls behandeltes Papier- und Pappmaterial, Wellkarton, Karton mit stehender Welle, Karton mit Wabenstruktur oder Wickelkarton, aber auch aus anderer Materialien wie z.B. MDF-Material oder Kunststoffe, wie insbesondere Polyethylen oder Polypropylen, gefertigt sein. Solche Materialen können rückstandsfrei zersetzbar sein. Auch Holz soll hier als Cellulosematerial verstanden werden.

Bei dem in Figur 2 veranschaulichten Ausführungsbeispiel ist vorgesehen, dass alle Bauteile mit Ausnahme der Filterelemente 90 in Form der Vliesmatten 92 thermisch regenerierbare Mehrweg-Bauteile sind und die wiederverwertbare Mehrwegstruktur 112 bilden, die folglich bei Figur 2A ohne die Gehäuse-Wandsegmente 72 und ohne das Bodenteil 80 zu erkennen ist. Nur die Filterelemente 90 in Form der Vliesmatten 92 sind thermisch zersetzbare Bauteile und definieren als solche die Einwegstruktur 114.

Wenn bei solch einem Filtermodul 40 die Grenzbeladung mit Overspray erreicht ist, wird dieses in der oben beschriebenen Art und Weise aus dem Anlagenbereich 36 entnommen und gegen ein leeres Filtermodul 40 ausgetauscht. Das beladene Filtermodul 40 wird einer thermischen Behandlung zugeführt, bei welcher sowohl der aufgenommene Overspray als auch die Filterelemente 90 thermisch zersetzt werden. Nach der thermischen Behandlung verbleibt die wiederverwertbare Mehrwegstruktur 112.

Diese Mehrwegstruktur 112 wird dann mit einsatzfähigen Filterelementen 90, d.h. hier mit Vliesmatten 92, bestückt, so dass wieder ein betriebsfähiges Filtermodul 40 ausgebildet wird, welches dann wieder im Austausch gegen ein beladenes Filtermodul 40 in die Beschichtungskabine 10 eingebracht werden kann.

Bei den anhand der Figuren 3 und 4 veranschaulichten Ausführungsbeispielen ist vorgesehen, dass alle Bauteile mit Ausnahme der Filtereinrichtung 106 als Ganzes thermisch regenerierbare Mehrweg-Bauteile sind und die wiederverwertbare Mehrwegstruktur 112 bilden. Die Filtereinrichtung 106 ist thermisch zersetzbar und definiert die Einwegstruktur 114, wozu alle Bauteile, welche zur Filtereinrichtung 106 gehören, thermisch zersetzbare Einweg-Bauteile sind.

Figur 5 zeigt nochmals schematisch die Beschichtungsanlage 12, wobei die oben erwähnten Vorbehandlungsstationen zusammenfassend mit 116 bezeichnet sind und außerdem exemplarisch drei Beschichtungskabinen 10 in Form von Beschichtungskabinen 10a, 10b, 10c für die Applikation eines Primers, eines Basislacks bzw. eine Klarlacks vorhanden sind, die von den zu beschichtenden Gegenständen 14 durchlaufen werden. Hiernach gelangen die Gegenstände 14 in einen Trockner 118, in dem die Beschichtung getrocknet wird. Unter Trocknen wird vorliegend sowohl das Austreiben von Lösungsmittel aus einer Beschichtung als auch das Härten einer Beschichtung verstanden, was beispielsweise durch eine Vernetzungsreaktion erfolgen kann.

Im Falle von Fahrzeugkarosserien 16 erfolgt nach dem Trocknen der Beschichtung die Montage des Fahrzeugs.

In den Beschichtungskabinen 10a, 10b, 10c fallen mit Overspray beladenen Filtermodule 40a an, die in Figur 5 unterhalb der Beschichtungskabinen 10 gezeigt sind und die nach Erreichen ihrer Grenzbeladung aus der Beschichtungskabine 10 entnommen und gegen ein leeres Filtermodul 40 ausgetauscht werden. Leere Filtermodule 40 sind in Figur 5 oberhalb der Beschichtungskabinen 10 gezeigt.

Die beladenen Filtermodule 40a werden einer thermischen Behandlung zugeführt, die in einer Thermobehandlungsvorrichtung 120 durchgeführt wird. Als thermische Behandlung kann jede Art der Erhitzung genutzt werden, durch welche eine Temperatur erreicht wird, bei welcher der in den beladenen Filtermodulen 40a vorhandene Overspray und gegebenenfalls eine vorhandene Einwegstruktur 114 thermisch zersetzt werden. Allgemein können die thermische zersetzbaren Bestandteile der beladenen Filtermodule 40a hierzu in den gasförmigen Zustand überführt oder, gegebenenfalls unter einer geregelten Sauerstoffzufuhr, zu Asche verbrannt werden.

Für die thermische Behandlung werden die beladenen Filtermodule 40a Temperaturen zwischen 200°C und 900°C, gegebenenfalls bis 1.500°C, vorzugsweise zwischen 300°C und 900°C, weiter bevorzugt zwischen 400°C und 900°C und besonders bevorzugt zwischen 400°C und 600°C ausgesetzt. Insbesondere kommt als thermische Behandlung eine Pyrolyse in Frage, wozu die Thermobehandlungsvorrichtung 120 ein Pyrolyseofen 122 mit einem nicht eigens gezeigten Pyrolysebrenner ist, der außerdem einen mit 123 bezeichneten Nachbrenner umfasst. Bei einer klassischen Pyrolyse erfolgt dies, ohne dass zusätzlich Sauerstoff zugeführt wird, gegebenenfalls kann jedoch auch Sauerstoff zugeführt werden.

Aus dem beladenen Filtermodule 40a entstehen bei der thermischen Behandlung aus dem Overspray und der Einwegstruktur 114 Reststoffe 124 und heißes Abgas 126. Im Falle der Pyrolyse in dem Pyrolyseofen 122 entstehen Asche und Reststoffe 128 und zunächst hei-βes Pyrolysegas 130. Das Pyrolysegas 130 ist brennbar und kann seinerseits als Brenngas für den nicht gezeigten Pyrolysebrenner genutzt werden. Bevor der Pyrolyseprozess in der Weise angelaufen ist, dass das Pyrolysegas 130 als Brenngas genutzt werden kann, muss der Pyrolysebrenner mit einem gesonderten Brenngas gespeist werden. Von dem Filter-modul 40a verbleibt nach der thermischen Behandlung die wiederverwertbare Mehrwegstruktur 112. In Figur 5 ist eine Variante des Filtermoduls 40 veranschaulicht, bei der als wiederverwertbare Mehrwegstruktur 114 nur das für zwei Filtereinrichtungen 106 ausgelegte Aufnahmegerüst 110 gemäß Figur 3 dient und welches folglich als einziges Bauteil nach der Pyrolyse zur erneuten Nutzung zur Verfügung steht.

Eine solche wiederverwertbare Mehrwegstruktur 112 wird dann wieder mit einer Einwegstruktur 114 zu einem Filtermodul 40 vervollständig. Hierzu wird beim in Figur 5 beschriebenen Ausführungsbeispiel die Mehrwegstruktur 112 in Form des Aufnahmegerüsts 110 mit zwei Filtereinrichtungen 106 bestückt und in ein Modulgehäuse 66 eingebracht, so dass ein leeres Filtermodul 40 gebildet ist, welche hiernach zum Abscheiden des Oversprays in einer der Beschichtungskabinen 10 eingesetzt werden kann.

Bevor die Mehrwegstruktur 112 mit der ergänzenden Einwegstruktur 114 bestückt wird, kann die Mehrwegstruktur 112 nach der thermischen Behandlung einer ergänzenden Reinigung unterzogen werden. Dabei kann die Mehrwegstruktur 112 oder auch einzelne thermisch regenerierbare Bauteile der Mehrwegstruktur 112 beispielsweise durch mechanische Erschütterung abgerüttelt, mit einem Reinigungsgas abgeblasen, mit einem Reinigungsmedium, insbesondere einer Reinigungsflüssigkeit, abgespült, mit einem Bürstwerkzeug manuell oder teil- oder vollautomatisiert abgebürstet, mit einem Wischmittel manuell oder teil- oder vollautomatisiert abgewischt oder mit einem Material- bzw. Partikelstrahl beaufschlagt werden.

Die Asche 128 kann auf einer Deponie 132 deponiert und damit abschließend entsorgt werden. Das Abgas 126 bzw. das Pyrolysegas 130 kann als Energiequelle genutzt werden. Beispielsweise kann das Abgas 126 als Wärmequelle für eine Sekundäreinrichtung verwendet werden, wozu es einem Wärmetauscher zugeführt werden kann, um seine Wärmeenergie zu nutzen. Dies ist allgemein bei 133 gezeigt. Zum Beispiel kann das Abgas 126 als Wärmequelle für eine Sekundäreinrichtung in Form des Trockners 118 dienen und genutzt werden, um die Atmosphäre in dem Trockner 118 auf diejenige Temperatur zu erwärmen, die für den Trocknungsvorgang notwendig ist.

Darüber hinaus kann das Pyrolysegas 130 zur Stromerzeugung genutzt werden, wofür in Figur 5 beispielhaft ein Blockheizkraftwerk 134 gezeigt ist. Bevor das Pyrolysegas 130 einem dortigen Verbrennungsmotor als Brenngas zugeführt werden kann, muss es gegebenenfalls abgekühlt werden. Die in dem Blockheizkraftwert 134 gewonnene Energie kann dann zum Betreiben der Vorbehandlungsstationen 116 und/oder der Beschichtungskabinen 10 und/oder des Trockners 118 genutzt werden. Die gewonnene Energie kann auch anderweitig genutzt werden; dies muss nicht im Zusammenhang mit der Beschichtungsanlage 12 stehen.

Bei einer weiteren in Figur 5 veranschaulichten Abwandlung wird die bei der thermischen Behandlung gewonnene thermische Energie, die in der Regel als Wärmeenergie des Abgases 126 vorliegt, in einem Energiespeicher 136 gespeichert und steht dann zu einem späteren Zeitpunkt zur Verfügung. Diese gespeicherte Energie kann beispielsweise zu einem späteren Zeitpunkt für den Betrieb der Thermobehandlungsvorrichtung 120, speziell des Pyrolyseofens 122, genutzt werden. Dies trägt dem Umstand Rechnung, dass üblicherweise mehrere beladene Filtermodule 40a chargenweise in die Thermobehandlungsvorrichtung 120 verbracht und dort thermisch behandelt werden. Zwischen der thermischen Behandlung zweier Chargen kann es zu Stillstandzeiten kommen; die Energie kann dann aus dem Energiespeicher 136 abgerufen werden, wenn sie benötigt wird.

Für Abgas 126 bis Temperaturen von etwa 850°C kann als thermischer Energiespeicher 136 beispielsweise ein Hochtemperatur-Energiespeicher verwendet werden, der als Wärmespeichermedium Sand oder feinen Kies verwendet; derartige Hochtemperatur-Energiespeicher sind am Markt bekannt.

Darüber hinaus kann auch die Energie des Abgases 126 zur Stromerzeugung genutzt werden, wozu in Figur 5 beispielhaft eine ORC-Anlage 138 gezeigt ist. In einer ORC-Anlage läuft ein sogenannter Organic Rankine Cycle ab, mittels welchem in an und für sich bekannter Art und Weise Strom erzeugt werden kann.

Auch die dort gewonnene Energie kann dann zum Betreiben der Vorbehandlungsstationen 116 und/oder der Beschichtungskabinen 10 und/oder des Trockners 118 genutzt werden. Die gewonnene Energie kann auch anderweitig genutzt werden; dies muss ebenfalls nicht im Zusammenhang mit der Beschichtungsanlage 12 stehen.

## Patentansprüche

1. Filtermodul zum Abscheiden von Overspray aus mit Overspray beladener Kabinenluft von Beschichtungsanlagen, insbesondere von Lackieranlagen, mit einem Modulgehäuse (66), in welchem eine Filterstruktur (88) untergebracht ist und welches einen Moduleinlass (74) und einen Modulauslass (76) aufweist, wobei das Filtermodul (40) derart konzipiert ist, dass es nach Erreichen einer Grenzbeladung mit Overspray gegen ein leeres Filtermodul (40) ausgetauscht wird,
wobei
das Filtermodul (40) eine wiederverwertbare Mehrwegstruktur (112) aus einem oder mehreren thermisch regenerierbaren Mehrweg-Bauteilen umfasst, so dass das Filter-modul (40) zumindest thermisch teilregenerierbar ist, derart, dass ein thermisch regenerierbares Mehrweg-Bauteil eine thermische Behandlung, bei welcher vorhandener Overspray thermisch zersetzt und hierdurch aus dem Filtermodul (40) entfernt wird, ohne Einbußen seiner Funktionsfähigkeit wenigstens einmal übersteht;
**dadurch gekennzeichnet, dass**
das Filtermodul im Betrieb strömungstechnisch und lösbar mit einer Luftleiteinrichtung (38) verbindbar ist, mit deren Hilfe der mit Overspray beladene Luftstrom zu dem Filtermodul (40) leitbar ist.

2. Filtermodul nach Anspruch 1, **dadurch gekennzeichnet, dass** es eine Einwegstruktur (114) aus einer oder mehreren thermisch zersetzbaren Einweg-Bauteilen umfasst.

3. Filtermodul nach Anspruch 1 oder 2, **dadurch gekennzeichnet, dass** ein oder mehrere thermisch regenerierbare Mehrweg-Bauteile oder ein oder mehrere thermisch zersetzbare Einweg-Bauteile aus folgender Gruppe vorhanden sind:
a) das Modulgehäuse (66) als Ganzes oder eine Gehäuse-Rahmenstruktur (70) des Modulgehäuses (66) und/oder ein oder mehrere Gehäuse-Wandsegmente (72) des Modulgehäuses (66);
b) eine Sammelwanne (82) für Beschichtungsmaterial, das sich in dem Filtermodul (40) abscheidet und nach unten abfließt;
c) die Filterstruktur (88) als Ganzes oder ein oder mehrere Filterelemente (90) der Filterstruktur (88), insbesondere ein oder mehrere Vliesmatten (92) der Filterstruktur (88);
d) eine Filterträgerstruktur (86) als Ganzes für die Filterstruktur (88) oder eine Trägerplatte (100) für Filterelemente (90) der Filterträgerstruktur (86) und/oder zumindest eine Stützwand (102) der Filterträgerstruktur (86) und/oder ein Aufnahmegerüst (110) zum Aufnehmen einer Filtereinrichtung (106), welche die Filterstruktur (88) umfasst;
e) die Filtereinrichtung (106) als Ganzes oder ein Filtergehäuse (108) der Filtereinrichtung (106).

4. Filtermodul nach Anspruch 2 oder 3, **dadurch gekennzeichnet, dass** ein oder mehrere thermisch zersetzbare Einweg-Bauteile aus einem oder mehreren der folgenden Materialien gefertigt sind: Cellulosematerial, insbesondere gegebenenfalls behandeltes Papier- und Pappmaterial, Wellkarton, Karton mit stehender Welle, Karton mit Wabenstruktur oder Wickelkarton, Holz; MDF-Material; Kunststoffmaterial, insbesondere Polyethylen oder Polypropylen.

5. Filtermodul nach einem der Ansprüche 1 bis 4, **dadurch gekennzeichnet, dass** ein oder mehrere thermisch regenerierbare Mehrweg-Bauteile aus einem oder mehreren der folgenden Materialien gefertigt sind: Metall oder Metalllegierung, insbesondere Edelstahl, Stahl oder Stahlblech; Keramikmaterial.

6. Abscheidevorrichtung zum Abscheiden von Overspray aus mit Overspray beladener Kabinenluft von Beschichtungsanlagen (12), insbesondere von Lackieranlagen, mit wenigstens einem Filtermodul (40), durch welches mit Overspray beladene Kabinenluft leitbar ist und in dem sich Overspray abscheidet, **dadurch gekennzeichnet, dass** das wenigstens eine Filtermodul (40) ein Filtermodul nach einem der Ansprüche 1 bis 5 ist.

7. Beschichtungsanlage zum Beschichten, insbesondere zum Lackieren, von Gegenständen (14), insbesondere von Fahrzeugkarosserien (16), mit
a) wenigstens einer Beschichtungskabine (10), in welcher die Gegenstände (14) mit Beschichtungsmaterial beaufschlagbar sind und durch welche ein Luftstrom geleitet werden kann, der entstehendes Overspray des Beschichtungsmaterials aufnimmt und abführt;
b) einer Abscheidevorrichtung, welcher dieser Luftstrom zuführbar ist und wo ein Großteil zumindest der Feststoffe aus dem Overspray abgeschieden wird,
**dadurch gekennzeichnet, dass**
c) die Abscheidevorrichtung nach Anspruch 6 ausgebildet ist und eine Luftleiteinrichtung (38) vorhanden ist, mit welcher das Filtermodul (40) im Betrieb strömungstechnisch und lösbar verbunden ist und mit deren Hilfe der mit Overspray beladene Luftstrom zu dem Filtermodul (40) geleitet wird.

8. Beschichtungsanlage nach Anspruch 7, **dadurch gekennzeichnet, dass** eine Thermobehandlungsvorrichtung (120), insbesondere ein Pyrolyseofen (122) vorhanden ist, in welchem ein oder mehrere beladene Filtermodule (40) in der Weise thermisch behandelbar sind, dass Overspray thermisch zersetzt wird.

9. Verfahren zum Betreiben einer Beschichtungsanlage (12) zum Beschichten, insbesondere zum Lackieren, von Gegenständen (14), insbesondere von Fahrzeugkarosserien (16), wobei Overspray aus Beschichtungsmaterial entsteht,
bei welchem der Overspray von einem Luftstrom aufgenommen und zu einer Abscheidevorrichtung in Form von einem oder mehreren Filtermodulen (40) geführt wird, in welchen ein Großteil zumindest der Feststoffe aus dem Overspray abgeschieden wird, wobei jedes Filtermodul (40) nach Erreichen einer Grenzbeladung mit Overspray gegen ein leeres Filtermodul (40) ausgetauscht wird,
**dadurch gekennzeichnet, dass**
ein oder mehrere Filtermodule (40) nach einem der Ansprüche 1 bis 5 verwendet werden, wobei ein Filtermodul (40) lösbar mit einer Luftleiteinrichtung (38) verbunden wird, mit deren Hilfe der mit Overspray beladene Luftstrom zu dem Filtermodul (40) geleitet wird, und wobei ein Filtermodul (40) nach Erreichen seiner Grenzbeladung mit Overspray als beladenes Filtermodul (40a) in einer Thermobehandlungsvorrichtung (120) einer thermischen Behandlung unterzogen wird, bei welcher der Overspray thermisch zersetzt wird.

10. Verfahren nach Anspruch 9, **dadurch gekennzeichnet, dass** ein oder mehrere Filtermodule (40) mit einer Einwegstruktur (114) verwendet werden, die bei der thermischen Behandlung thermisch zersetzt wird, wobei die nach der thermischen Behandlung verbleibende Mehrwegstruktur (112) dann wieder mit einer Einwegstruktur (114) zu einem Filtermodul (40) vervollständigt wird, welches hiernach zum Abscheiden von Overspray verwendet wird.

11. Verfahren nach Anspruch 9 oder 10, **dadurch gekennzeichnet, dass** das beladene Filtermodul (40a) einer Temperatur zwischen 200°C und 1.500°C, vorzugsweise zwischen 300°C und 900°C, weiter bevorzugt zwischen 400°C und 900°C und besonders bevorzugt zwischen 400°C und 600°C ausgesetzt wird.

12. Verfahren nach einem der Ansprüche 9 bis 11, **dadurch gekennzeichnet, dass** die thermische Behandlung eine Pyrolyse ist, die in einem Pyrolyseofen (122) und insbesondere ohne gesonderte Zufuhr von Sauerstoff durchgeführt wird, wobei ein Pyrolysegas (130) entsteht.

13. Verfahren nach einem der Ansprüche 9 bis 12, **dadurch gekennzeichnet, dass** bei der thermischen Behandlung ein heißes Abgas (126) entsteht, welches als Wärmequelle für eine Sekundäreinrichtung oder zur Stromerzeugung genutzt wird.

14. Verfahren nach Anspruch 13, **dadurch gekennzeichnet, dass** die Sekundäreinrichtung ein Trockner (118) ist, in dem die beschichteten Gegenstände (14) getrocknet werden und welcher einen Wärmetauscher umfasst, dem das Abgas (126) zugeführt wird, und/oder dass das Pyrolysegas (130) zur Stromerzeugung einem Blockheizkraftwerk (134) zugeführt wird.

15. Verfahren nach einem der Ansprüche 9 bis 14, bei welchem die bei der thermischen Behandlung gewonnene thermische Energie in einem Energiespeicher (136) gespeichert wird und gegebenenfalls nachfolgend in einer ORC-Anlage (138) genutzt wird

16. Verfahren nach einem der Ansprüche 9 bis 15, bei welchem die Energie des Abgases (126) zur Stromerzeugung genutzt wird, wozu das Abgas (126) insbesondere einer ORC-Anlage (138) zugeführt wird.

## Claims

1. A filter module for separating overspray from overspray-laden booth air of coating facilities, in particular of painting facilities, having a module housing (66) in which a filter structure (88) is accommodated and which has a module inlet (74) and a module outlet (76), wherein the filter module (40) is designed in such a way that, after reaching a limit loading with overspray, it is exchanged for an empty filter module (40),
wherein
the filter module (40) comprises a recyclable reusable structure (112) composed of one or more thermally regenerable reusable components, with the result that the filter module (40) is at least partially thermally regenerable in such a way that a thermally regenerable reusable component withstands at least once a thermal treatment in which present overspray is thermally decomposed and thereby removed from the filter module (40) without losses in its functional capability,
characterizes in that,
during operation, the filter module is fluidically and releasably connected to an air-channeling device (38) by means of which the overpray-laden air flow is channeled to the filter module (40).

2. The filter module as claimed in claim 1, **characterized in that** it comprises a disposable structure (114) composed of one or more thermally decomposable disposable components.

3. The filter module as claimed in claim 1 or 2, **characterized in that** one or more thermally regenerable reusable components or one or more thermally decomposable disposable components are present from the following group:
a) the module housing (66) as a whole or a housing frame structure (70) of the module housing (66) and/or one or more housing wall segments (72) of the module housing (66);
b) a collecting trough (82) for coating material which is separated in the filter module (40) and flows off downwardly;
c) the filter structure (88) as a whole or one or more filter elements (90) of the filter structure (88), in particular one or more nonwoven mats (92) of the filter structure (88);
d) a filter carrier structure (86) as a whole for the filter structure (88) or a carrier plate (100) for filter elements (90) of the filter carrier structure (86) and/or at least one supporting wall (102) of the filter carrier structure (86) and/or a receiving framework (110) for receiving a filter device (106) which comprises the filter structure (88);
e) the filter device (106) as a whole or a filter housing (108) of the filter device (106).

4. The filter module as claimed in claim 2 or 3, **characterized in that** one or more thermally decomposable disposable components are produced from one or more of the following materials: cellulose material, in particular possibly treated paper and paperboard material, corrugated cardboard, cardboard with vertical corrugation, cardboard with a honeycomb structure or wrap around cardboard, wood; MDF material; plastics material, in particular polyethylene or polypropylene.

5. The filter module as claimed in one of claims 1 to 4, **characterized in that** one or more thermally regenerable reusable components are produced from one or more of the following materials: metal or metal alloy, in particular stainless steel, steel or steel sheet; ceramic material.

6. A separating apparatus for separating overspray from overspray-laden booth air of coating facilities (12), in particular of painting facilities, having at least one filter module (40) through which overspray-laden booth air can be channeled and in which overspray is separated, **characterized in that** the at least one filter module (40) is a filter module as claimed in one of claims 1 to 5.

7. A coating facility for coating, in particular for painting, objects (14), in particular vehicle bodies (16), having
a) at least one coating booth (10) in which the objects (14) can have coating material applied to them and through which an air flow can be channeled that receives and removes occurring overspray of the coating material;
b) a separating apparatus to which this air flow can be fed and where a large part at least of the solids is separated from the overspray,
**characterized in that**
c) the separating apparatus is designed as claimed in claim 6 and an air-channeling device (38) is provided with which, during operation, the filter module (40) is fluidically and releasably connected and by means of which the overpray-laden air flow is channeled to the filter module (40).

8. The coating facility as claimed in claim 7, **characterized in that** a thermal treatment apparatus (120), in particular a pyrolysis oven (122), is present in which one or more laden filter modules (40) can be thermally treated in such a way that overspray is thermally decomposed.

9. A method for operating a coating facility (12) for coating, in particular for painting, objects (14), in particular vehicle bodies (16), wherein overspray from coating material occurs,
in which the overspray is received by an air flow and guided to a separating apparatus in the form of one or more filter modules (40) in which a large amount at least of the solids is separated from the overspray, wherein each filter module (40), after reaching a limit loading with overspray, is exchanged for an empty filter module (40),
**characterized in that**
one or more filter modules (40) as claimed in one of claims 1 to 5 are used, wherein a filter module (40) is releasably connected to an air-channeling device (38) by means of which the overpray-laden air flow is channeled to the filter module (40), and wherein a filter module (40), after reaching its limit loading with overspray, is subjected as a laden filter module (40a) in a thermal treatment apparatus (120) to a thermal treatment in which the overspray is thermally decomposed.

10. The method as claimed in claim 9, **characterized in that** use is made of one or more filter modules (40) having a disposable structure (114) which is thermally decomposed during the thermal treatment, wherein the reusable structure (112) remaining after the thermal treatment is then completed again with a disposable structure (114) to form a filter module (40) which is used thereafter for separating overspray.

11. The method as claimed in claim 9 or 10, **characterized in that** the laden filter module (40a) is exposed to a temperature between 200°C and 1500°C, preferably between 300°C and 900°C, more preferably between 400°C and 900°C and particularly preferably between 400°C and 600°C.

12. The method as claimed in one of claims 9 to 11, **characterized in that** the thermal treatment is a pyrolysis which is carried out in a pyrolysis oven (122) and in particular without separate supply of oxygen, wherein a pyrolysis gas (130) occurs.

13. The method as claimed in one of claims 9 to 12, **characterized in that**, during the thermal treatment, there occurs a hot exhaust gas (126) which is used as a heat source for a secondary device or for power generation.

14. The method as claimed in claim 13, **characterized in that** the secondary device is a drier (118) in which the coated objects (14) are dried and which comprises a heat exchanger to which the exhaust gas (126) is fed, and/or **in that** the pyrolysis gas (130) is fed for power generation to a combined heat and power plant (134).

15. The method as claimed in one of claims 9 to 14, in which the thermal energy obtained during the thermal treatment is stored in an energy store (136) and is possibly subsequently used in an ORC plant (138).

16. The method as claimed in one of claims 9 to 15, in which the energy of the exhaust gas (126) is used for power generation, for which purpose the exhaust gas (126) is fed in particular to an ORC plant (138).

## Revendications

1. Module de filtre pour la séparation de surpulvérisation d'air de cabine chargé en surpulvérisation d'installations d'enduction, notamment d'installations de peinture, avec un logement de module (66) dans lequel une structure de filtre (88) est hébergée, et qui présente une entrée de module (74) et une sortie de module (76), dans lequel le module de filtre (40) est conçu de telle sorte qu'il est échangé par un module de filtre vide (40) après atteinte d'une charge limite en surpulvérisation,
dans lequel
le module de filtre (40) comprend une structure réutilisable recyclable (112) en un ou plusieurs composants réutilisables pouvant être régénérés thermiquement de sorte que le module de filtre (40) peut être partiellement régénéré au moins thermiquement de telle sorte qu'un composant réutilisable pouvant être régénéré thermiquement surmonte un traitement thermique au moins une fois lors duquel de la surpulvérisation présente est décomposée thermiquement et éliminée de ce fait du module de filtre (40) sans perte de sa fonctionnalité ;
**caractérisé en ce que**
le module de filtre peut être connecté en service par la mécanique des fluides et de manière amovible à une installation de conduite d'air (38) à l'aide de laquelle le courant d'air chargé en surpulvérisation peut être dirigé vers le module de filtre (40).

2. Module de filtre selon la revendication 1, **caractérisé en ce qu'**il comprend une structure à usage unique (114) en un ou plusieurs composants à usage unique pouvant être décomposés thermiquement.

3. Module de filtre selon la revendication 1 ou 2, **caractérisé en ce qu'**un ou plusieurs composants réutilisables pouvant être régénérés thermiquement ou un ou plusieurs composants à usage unique pouvant être décomposés thermiquement du groupe suivant sont présents :
a) le logement de module (66) en entier ou une structure de cadre de logement (70) du logement de module (66) et/ou un ou plusieurs segments de paroi de logement (72) du logement de module (66) ;
b) une cuve collectrice (82) pour du matériau d'enduction qui se sépare dans le module de filtre (40) et s'écoule vers le bas ;
c) la structure de filtre (88) en entier ou un ou plusieurs éléments de filtre (90) de la structure de filtre (88), notamment un ou plusieurs matelas de fibres (92) de la structure de filtre (88) ;
d) une structure porteuse de filtre (86) en entier pour la structure de filtre (88) ou une plaque porteuse (100) pour des éléments de filtre (90) de la structure porteuse de filtre (86) et/ou au moins une paroi de support (102) de la structure porteuse de filtre (86) et/ou un châssis de réception (110) pour la réception d'une installation de filtre (106) qui comprend la structure de filtre (88) ;
e) l'installation de filtre (106) en entier ou un logement de filtre (108) de l'installation de filtre (106).

4. Module de filtre selon la revendication 2 ou 3, **caractérisé en ce qu'**un ou plusieurs composants à usage unique pouvant être décomposés thermiquement sont fabriqués à partir d'un ou plusieurs des matériaux suivants : matériau de cellulose, notamment matériau de papier et carton éventuellement traité, carton ondulé, carton à ondes verticales, carton à structure alvéolaire ou carton enroulé, bois ; matériau MDF ; matériau plastique, notamment polyéthylène ou polypropylène.

5. Module de filtre selon une des revendications 1 à 4, **caractérisé en ce qu'**un ou plusieurs composants réutilisables pouvant être régénérés thermiquement sont fabriqués à partir d'un ou plusieurs des matériaux suivants : métal ou alliage métallique, notamment acier inoxydable, acier ou tôle d'acier ; matériau céramique.

6. Dispositif de séparation pour la séparation de surpulvérisation d'air de cabine chargé en surpulvérisation d'installations d'enduction (12), notamment d'installations de peinture, avec au moins un module de filtre (40) à travers lequel de l'air de cabine chargé en surpulvérisation peut être dirigé et dans lequel de la surpulvérisation se sépare, **caractérisé en ce que** l'au moins un module de filtre (40) est un module de filtre selon une des revendications 1 à 5.

7. Installation d'enduction pour l'enduction, notamment pour la peinture, d'objets (14), notamment de carrosseries de véhicule (16), avec
a) au moins une cabine d'enduction (10) dans laquelle les objets (14) peuvent être sollicités avec du matériau d'enduction et à travers laquelle un courant d'air peut être dirigé, lequel absorbe et évacue de la surpulvérisation émergente du matériau d'enduction ;
b) un dispositif de séparation auquel peut être acheminé ce courant d'air et où une grande partie au moins des solides est séparée de la surpulvérisation,
**caractérisée en ce que**
c) le dispositif de séparation est réalisé selon la revendication 6 et une installation de conduite d'air (38) est présente, à laquelle le module de filtre (40) est connecté en service par la mécanique des fluides et de manière amovible et à l'aide de laquelle le courant d'air chargé en surpulvérisation est dirigé vers le module de filtre (40).

8. Installation d'enduction selon la revendication 7, **caractérisée en ce qu'**un dispositif de traitement thermique (120), notamment un four à pyrolyse (122), est présent, dans lequel un ou plusieurs modules de filtre chargés (40) peuvent être traités thermiquement de telle sorte que de la surpulvérisation est décomposée thermiquement.

9. Procédé d'exploitation d'une installation d'enduction (12) pour l'enduction, notamment pour la peinture, d'objets (14), notamment de carrosseries de véhicule (16), dans lequel de la surpulvérisation émerge de matériau d'enduction,
lors duquel la surpulvérisation est absorbée par un courant d'air et guidée vers un dispositif de séparation sous la forme d'un ou plusieurs modules de filtre (40), dans lesquels une grande partie au moins des solides est séparée de la surpulvérisation, dans lequel chaque module de filtre (40) est échangé par un module de filtre vide (40) après atteinte d'une charge limite en surpulvérisation, **caractérisé en ce que**
un ou plusieurs modules de filtre (40) selon une des revendications 1 à 5 sont utilisés, dans lequel un module de filtre (40) est connecté de manière amovible à une installation de conduite d'air (38), à l'aide de laquelle le courant d'air chargé en surpulvérisation est dirigé vers le module de filtre (40), et dans lequel un module de filtre (40) est soumis à un traitement thermique après atteinte de sa charge limite en surpulvérisation en tant que module de filtre chargé (40a) dans un dispositif de traitement thermique (120), lors duquel la surpulvérisation est décomposée thermiquement.

10. Procédé selon la revendication 9, **caractérisé en ce qu'**un ou plusieurs modules de filtre (40) sont utilisés avec une structure à usage unique (114) qui est décomposée thermiquement lors du traitement thermique, dans lequel la structure réutilisable (112) restant après le traitement thermique est ensuite de nouveau complétée avec une structure à usage unique (114) en un module de filtre (40) qui est ensuite utilisé pour la séparation de surpulvérisation.

11. Procédé selon la revendication 9 ou 10, **caractérisé en ce que** le module de filtre chargé (40a) est exposé à une température comprise entre 200 °C et 1500 °C, de préférence entre 300 °C et 900 °C, de manière davantage préférée entre 400 °C et 900 °C et de manière particulièrement préférée entre 400 °C et 600 °C.

12. Procédé selon une des revendications 9 à 11, **caractérisé en ce que** le traitement thermique est une pyrolyse qui est réalisée dans un four à pyrolyse (122) et notamment sans apport séparé d'oxygène, dans lequel un gaz de pyrolyse (130) émerge.

13. Procédé selon une des revendications 9 à 12, **caractérisé en ce qu'**un gaz d'échappement chaud (126) émerge lors du traitement thermique, lequel est exploité en tant que source de chaleur pour une installation secondaire ou pour la génération de courant.

14. Procédé selon la revendication 13, **caractérisé en ce que** l'installation secondaire est un séchoir (118) dans lequel les objets enduits (14) sont séchés et qui comprend un échangeur de chaleur auquel le gaz d'échappement (126) est acheminé, et/ou que le gaz de pyrolyse (130) est acheminé à une centrale de cogénération (134) pour la génération de courant.

15. Procédé selon une des revendications 9 à 14, lors duquel l'énergie thermique obtenue lors du traitement thermique est stockée dans un réservoir d'énergie (136) et éventuellement exploitée ensuite dans une installation ORC (138).

16. Procédé selon une des revendications 9 à 15, lors duquel l'énergie du gaz d'échappement (126) est exploitée pour la génération de courant, pour laquelle le gaz d'échappement (126) est notamment acheminé à une installation OCR (138).
